# EUROPÄISCHE PATENTANMELDUNG

(11) **EP 1 832 775 A2**
(43) Veröffentlichungstag der Anmeldung: **12.09.2007**
(21) Anmeldenummer: 07003083.8
(22) Anmeldetag: 14.02.2007
(51) Int. Cl.: F16D 48/06

(54) **Verfahren und Vorrichtung zum Überwachen des Betriebs einer von einem Betätigungsaktor in Schliessstellung bewegten und sich selbsttätig in Offenstellung bewegenden Kupplung**

(30) Priorität: 09.03.2006 DE 102006010937
(71) Anmelder: LuK Lamellen und Kupplungsbau Beteiligungs KG, 77815 Bühl (DE)
(72) Erfinder: Ehrlich, Matthias, 77815 Bühl (DE); Stengel, Frank, 76534 Baden-Baden (DE); Fuß, Martin, Wooster Ohio 44691 (US); Schweizer, Alexander, 77815 Bühl (DE); Zimmermann, Martin, 77880 Sasbach (DE); Martin, Jens, 76547 Sinzheim-Kartung (DE); Hirt, Joachim, 77704 Oberkirch (DE)

(57) **Zusammenfassung**

Bei einer Kupplung (10), die von einem Aktor (14) in Schließstellung gedrängt wird, und die sich selbsttätig durch eine Öffnungsfeder in Öffnungsstellung bewegt, wird die Bewegung der Kupplung (10) in Öffnungsstellung überwacht und eine Fehlfunktion angezeigt.

## Beschreibung

Die Erfindung betrifft ein Verfahren und eine Vorrichtung zum Überwachen des Betriebs einer von einem Betätigungsaktor in Schließstellung bewegten und sich selbsttätig in Offenstellung bewegenden Kupplung.

Automatisierte bzw. von einem Aktor betätigte Kupplungen finden in modernen Kraftfahrzeugen zunehmend Verwendung. Der Betätigungssicherheit solcher Kupplungen kommt nicht nur aus Komfortgründen, sondern auch unter Sicherheitsaspekten entscheidende Bedeutung zu.

Aus der DE 102 35 386 A1 ist ein Verfahren zum Ansteuern einer Getriebeaktorik mit einem Kupplungsaktor und einem Steuergerät für eine automatisierte Kupplung bekannt, bei dem der Kupplungsaktor in Abhängigkeit von bestimmten Betriebszuständen derart angesteuert wird, dass sicherheitskritische Situationen vermieden werden. Beispielsweise kann bei einem Einschaltvorgang bei Inbetriebnahme eine Kraft- und/oder Geschwindigkeitsreduktion der Betätigung durch den Aktor vorgenommen werden. Zum Erkennen von Kulissenanschlägen kann ein geeigneter Algorithmus vorgesehen sein. Weiter kann eine fehlerhafte Drehrichtung des Motors erkannt und/oder korrigiert werden. Die Stellung der Kupplung kann anhand des Kraftverlaufes einer Bewegungsgröße kontrolliert werden.

Für manche Anwendungsfälle werden Kupplungen verwendet, die bei einem Fehler im Betätigungssystem selbsttätig ihre Offenstellung einnehmen, damit beispielsweise ein unbeabsichtigtes Inbetriebsetzen des Fahrzeugs vermieden wird. Bei Parallelschaltgetrieben bzw. Doppelkupplungsgetrieben ist es zwingend erforderlich, dass die beiden Kupplungen ihren jeweiligen Offenzustand sicher einnehmen. Solche Doppelkupplungsgetriebe enthalten zwei Teilgetriebe, mit denen unterschiedliche Gänge geschaltet werden. Wenn beispielsweise mit einem Teilgetriebe die geraden Gänge und mit einem anderen Teilgetriebe die ungeraden Gänge geschaltet werden, muss die dem Getriebe mit ungeraden Gängen zugeordnete Kupplung bei einem eingelegten Gang offen sein, wenn die zu dem Teilgetriebe mit geraden Gängen gehörende Kupplung geschlossen ist und beispielsweise mit dem zweiten Gang gefahren wird. In dem Teilgetriebe mit den ungeraden Gängen kann dann bei offener Kupplung ein ungerader Gang voreingelegt werden, auf den lediglich durch Schließen der Kupplung das Getriebe mit den ungeraden Gängen und Öffnen der Kupplung des Teilgetriebes mit den geraden Gängen geschaltet wird. Wenn in beiden Teilgetrieben ein Gang eingelegt ist und beide Kupplungen geschlossen wären, würde dies zu einer Zerstörung des Getriebes führen. Entsprechend werden Kupplungen von Parallelschaltgetrieben bevorzugt derart gebaut, dass sie von ihrem Aktor gegen die Kraft einer Öffnungsfeder in Schließstellung gedrückt werden und von der Schließfeder in Öffnungsstellung bewegt werden, sobald der Aktor nicht mehr mit Energie zum Schließen der Kupplung beaufschlagt ist.

Wenn bei solchen in Schließstellung gedrängten Kupplungen die Rückstellkraft der Öffnungsfeder nicht mehr ausreicht, um ein Betätigungsglied in seine Ausgangsposition zurückzubewegen, würde die Kupplung, auch wenn keine Betätigungskraft in Schließrichtung mehr aufgebracht wird, nicht vollständig öffnen. Ursachen dafür können beispielsweise Verschleiß im Betätigungsmechanismus, Korrosion oder sonstige Einflüsse sein.

Der Erfindung liegt die Aufgabe zugrunde, Möglichkeiten anzugeben, wie sichergestellt werden kann, dass eine in Schließstellung gedrängte Kupplung selbsttätig in ihre Offenstellung zurückkehrt.

Lösungen dieser Aufgabe werden mit einem Verfahren gemäß dem Anspruch 1 und einer Vorrichtung gemäß dem Anspruch 5 erzielt. Die auf die unabhängigen Ansprüche rückbezogenen Unteransprüche kennzeichnen jeweils vorteilhafte Durchführungsformen des Verfahrens bzw. Ausführungsformen der Vorrichtung.

Erfindungsgemäß wird bei einem Verfahren zum Überwachen des Betriebs einer von einem Betätigungsaktor in Schließstellung bewegten und sich selbsttätig in Offenstellung bewegenden Kupplung das Erreichen der Offenstellung der Kupplung bei fehlender Energiebeaufschlagung des Aktors überwacht.

Vorteilhafterweise wird das Erreichen der Offenstellung der Kupplung dadurch überwacht, dass ein bei Erreichen der Offenstellung der Kupplung sich in einer vorbestimmten Stellung befindliches Bauteil die vorbestimmte Stellung erreicht.

Beispielsweise kann zum Überwachen die Geschwindigkeit eines sich bei aus der Schließstellung in die Offenstellung bewegenden Kupplung bewegenden Bauteils erfasst und mit einer Sollgeschwindigkeit verglichen werden.

Gemäß einer Weiterbildung des erfindungsgemäßen Verfahrens kann die Kupplung mittels eines Notaktors in die Offenstellung bewegt werden, wenn sie die Offenstellung nicht innerhalb einer vorbestimmten Zeitdauer nach Abschalten der Energiebeaufschlagung des Betätigungsaktors erreicht.

Bei einer erfindungsgemäßen Vorrichtung zum Überwachen des Betriebs einer von einem Betätigungsaktor in Schließstellung bewegten und sich selbsttätig in Offenstellung bewegenden Kupplung ist der Betätigungsaktor ein Elektromotor, dessen Ausgangswelle über ein Getriebe ein Betätigungsglied der Kupplung bewegt, ist das Betätigungsglied gegen die Kraft einer die Kupplung in Öffnungsstellung vorspannenden Öffnungsfeder von dem in Schließdrehrichtung drehenden Elektromotor derart bewegbar, dass die Kupplung schließt, und ist das Getriebe derart ausgebildet, dass der Elektromotor bei fehlender Energiebeaufschlagung durch die Kraft der Öffnungsfeder entgegen der Schließdrehrichtung dreht, bis die Kupplung ihre Offenstellung erreicht, und ist eine Überwachungseinrichtung vorgesehen zum Überwachen, ob die Kupplung nach Abschalten der Energiebeaufschlagung des Elektromotors für dessen Antrieb in Öffnungsdrehrichtung ihre Offenstellung erreicht.

Die Überwachungseinrichtung kann beispielsweise überwachen, ob die Kupplung ihre Offenstellung innerhalb einer vorbestimmten Zeitdauer nach Abschalten der Energiebeaufschlagung des Elektromotors für dessen Antrieb in Öffnungsdrehrichtung erreicht.

Die Überwachungseinrichtung kann das Erreichen der Offenstellung durch Betätigen eines Schalters erfassen.

Gemäß einer Ausführungsform der erfindungsgemäßen Vorrichtung erfasst die Überwachungseinrichtung die Drehzahl des Elektromotors bei dessen Antrieb durch die Öffnungsfeder löst und eine Fehlermeldung auslöst, wenn diese Drehzahl von einer vorbestimmten Drehzahl um mehr als ein Schwellwert abweicht.

Die Überwachungseinrichtung kann bei Feststellen eines Fehlers bei der selbstständigen Bewegung der Kupplung aus der Schließstellung in die Offenstellung einen Aktor zum Bewegen der Kupplung aus der Schließstellung in die Offenstellung aktivieren.

Die Kupplung, deren Betrieb überwacht wird, kann eine Kupplung eines Parallelschaltgetriebes sein.

Die Erfindung kann für alle Arten von Kupplungen bzw. Drehmomentübertragungseinrichtungen eingesetzt werden, die von einem Aktor in eine Stellung gedrängt werden, bei der die Übertragung von Drehmoment möglich ist, und die selbsttätig in eine Stellung zurückkehren, in der die Drehmomentübertragung unterbrochen ist.

Die Erfindung wird im Folgenden anhand schematischer Zeichnungen beispielsweise und mit weiteren Einzelheiten erläutert.

In den Figuren stellen dar:
Fig. 1 ein Beispiel einer Betätigungseinrichtung für eine Kupplung und
Fig. 2 ein Flussbild zur Erläuterung der Erfindung.

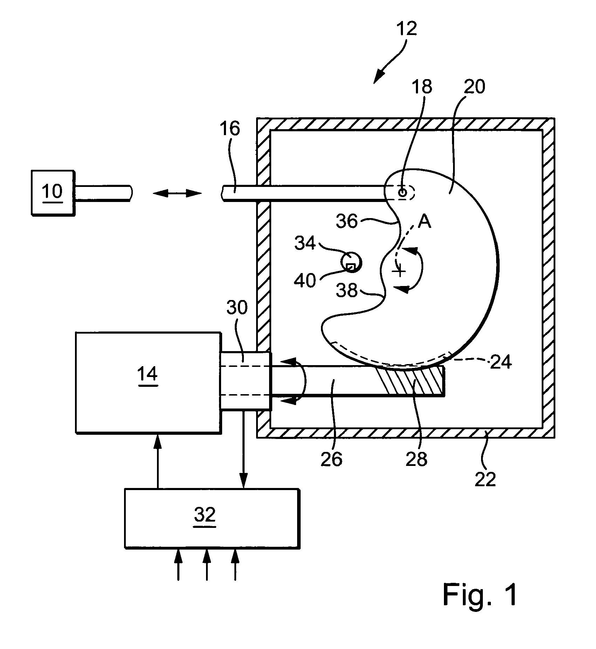

Gemäß Fig. 1 ist eine insgesamt mit 10 bezeichnete Kupplung, beispielsweise eine Kupplung eines Parallelschaltgetriebes, über einen insgesamt mit 12 bezeichneten Übertragungsmechanismus mit einem Aktor, im dargestellten Beispiel einem Elektromotor 14, verbunden.

Die Kupplung 10 ist von der an sich bekannten Bauart, bei der die Kupplung in ihren Schließzustand bzw. Drehmoment übertragenen Zustand gegen die Kraft einer kupplungsinternen Öffnungsfeder gedrängt werden muss.

Der Übertragungsmechanismus enthält ein Betätigungsglied 16, das direkt, über weitere Koppelglieder, oder über eine hydraulische Übertragungsstrecke mit einem Kupplungshebel verbunden ist, dessen Stellung das von Kupplung übertragbare Moment bestimmt.

Das Betätigungsglied 16 ist über ein Lager 18 mit einem Segmentrad 20 verbunden, das um eine Achse A drehbar in einem Gehäuse 22 gelagert ist. Das Gehäuse 22 kann starr mit dem Gehäuse der Kupplung oder einem Getriebegehäuse verbunden sein.

Das Segmentrad 20 weist an einem Umfangsbereich eine Verzahnung 24 auf, die mit einer an einer Ausgangswelle 26 des Elektromotors 14 ausgebildeten Schneckenverzahnung 28 kämmt. Zur Erfassung der Drehung der Ausgangswelle 26 ist ein Inkrementzähler 30 vorgesehen.

Zur Steuerung des Elektromotors 14 dient ein elektronisches Steuergerät 32 mit Mikroprozessor und zugehörigen Speichereinrichtungen, wobei ein Eingang mit dem Inkrementzähler 30 und weitere Eingänge mit Ausgängen von Sensoren oder einem anderen Steuergerät, gegebenenfalls über einen Bus, verbunden sind, über die das Steuergerät 32 mit für den Betrieb der Kupplung 10 relevanten Daten versorgt wird. Ein Ausgang des Steuergerätes 32 ist mit dem Elektromotor 14 verbunden.

Die Drehbarkeit des Segmentrades 20 ist durch wenigstens einen Anschlag 34 begrenzt, an dem eine Anschlagfläche 36 des Segmentrades 20 bei voll geschlossener Kupplung anliegt.

An dem gleichen Anschlag 34 oder einem weiteren Anschlag liegt bei voll geöffneter Kupplung eine weitere Anschlagfläche 38 des Segmentrades 20 an, deren Anlage mittels eines Schalters 40 festgestellt werden kann.

Im Steuergerät 32 ist ein Programm zur Referenzierung vorgesehen, mit dem der Zählstand des Inkrementzählers 30 gespeichert werden kann, der erreicht ist, wenn das Segmentrad 20 seine der Schließstellung oder der Offenstellung der Kupplung 10 entsprechende Drehstellung erreicht hat. Diese Referenzierung kann dadurch erfolgen, dass die Ausgangswelle 26 nicht mehr dreht, obwohl der Elektromotor 14 weiter mit Spannung derart beaufschlagt wird, dass das Betätigungsglied 16 die Kupplung in Schließstellung drängen will. Die Referenzierung kann auch dadurch erfolgen, dass bei Erreichen des Anschlags ein Schalter betätigt wird.

Aufbau und Funktion der beschriebenen Anordnung sind an sich bekannt und werden daher nicht weiter erläutert.

Erfindungsgemäß ist im Steuergerät 32 ein Programm abgelegt, mit dem überprüft wird, ob die in der Kupplung 10 vorgesehene, nicht dargestellte Öffnungsfeder bei Fehlen der Spannungsbeaufschlagung des Elektromotors 14 das Segmentrad 20 in Uhrzeigerrichtung drängt und dabei wegen nicht selbst hemmender Ausbildung des Eingriffes zwischen der Schneckenverzahnung 28 und der Verzahnung 24 die Ausgangswelle 26 des Elektromotors 14 in die zur Schließdrehrichtung entgegen gesetzte Öffnungsdrehrichtung bewegt.

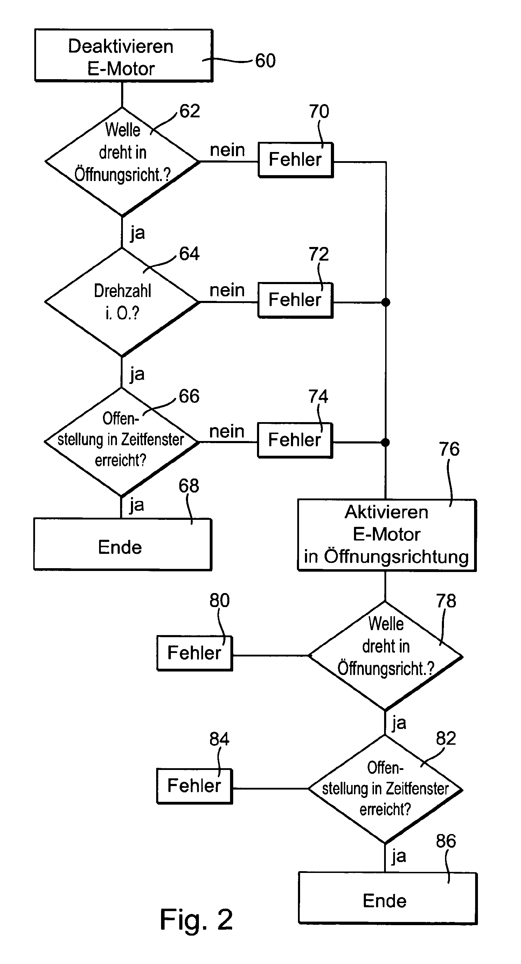

Ein Beispiel eines entsprechenden Verfahrens wird anhand der Fig. 2 erläutert:

Sei angenommen, im Schritt 60 wird die Spannungsbeaufschlagung des Elektromotors 14, infolge der die Kupplung 10 in geschlossenem Zustand gehalten wird, abgeschaltet, um die Kupplung zu öffnen. Im Schritt 62 wird anschließend überprüft, ob sich die Ausgangswelle 26 unter der Kraft der kupplungsinternen Öffnungsfeder in Öffnungsrichtung dreht. Dies kann mit Hilfe des Inkrementzählers 30 und eines an sich bekannten Drehrichtungssensors erfolgen.

Wenn sich die Welle in richtiger Richtung dreht, wird im Schritt 64 überprüft, ob die Drehzahl der Welle innerhalb eines vorbestimmten Bereiches liegt, der im Steuergerät 32 gespeichert ist. Ist dies der Fall, so wird im Schritt 66 überprüft, ob die Offenstellung innerhalb eines vorbestimmten Zeitfensters erreicht wird, das in dem Steuergerät 32 gespeichert ist. Das Erreichen der Offenstellung kann dadurch festgestellt werden, dass der Schalter 40 betätigt wird.

Für den Fall, dass die Offenstellung korrekt erreicht wurde, endet das Verfahren im Schritt 68. Wenn in den Schritten 62, 64 oder 66 jeweils ein "Nein" bestimmt wird, so wird in den Schritten 70, 72 bzw. 74 ein Fehler angezeigt, der darauf hindeutet, dass in dem Kupplungsbetätigungssystem ein Fehler aufgetreten ist. Da beispielsweise bei Verwendung der Kupplung 10 in einem Doppelkupplungsgetriebe ein vollständiges Öffnen der Kupplung 10 Vorraussetzung für ein vollständiges Schließen der anderen Kupplung ist, wird bei Auftreten eines der Fehler im Schritt 76 der Elektromotor 14 mit Spannung derart beaufschlagt, dass er das Bestreben hat, in Öffnungsrichtung zu drehen. Im Schritt 78 wird anschließend festgestellt, ob sich die Welle 26 in Öffnungsrichtung dreht. Ist dies nicht der Fall, so deutet dies auf einen gravierenden Fehler, der im Schritt 80 angezeigt wird.

Wenn der Schritt 78 zum Ergebnis "Ja" führt, wird im Schritt 82 überprüft, ob die Offenstellung innerhalb eines vorbestimmten, im Steuergerät 32 abgelegten Zeitfensters erreicht wird. Ist dies nicht der Fall, so deutet dies auf einen gravierenden Fehler, der im Schritt 84 angezeigt wird. Wird die Offenstellung erreicht, so geht das System zum Ende 86. Die in den Schritten 70, 72, 74, 80 und 84 ermittelten Fehler deuten jeweils auf eine spezifische Fehlfunktion des Systems, die zu entsprechenden Reaktionen führen kann, beispielsweise Anfahren einer Werkstatt, Reparatur oder Austausch des Systems usw. Wenn im Schritt 84 ein Fehler angezeigt wird, so kann die Kupplung 10 nicht geöffnet werden, so dass das Fahrzeug nur durch Betätigen der Bremse und/oder Abschalten des Motors stillgesetzt werden kann.

Das beschriebene System und das geschilderte Verfahren können in unterschiedlichster Weise abgeändert werden.

Beispielsweise kann der Elektromotor 14 über einen nur in Schließrichtung der Kupplung greifenden Freilauf mit der Ausgangswelle 26 gekuppelt sein. Dies erleichtert die Drehung der Welle 26 in Öffnungsrichtung, macht jedoch den Schritt 76 unmöglich. Für diesen Fall kann ein Notaktor vorgesehen sein, der an andere Stelle in den Betätigungsmechanismus der Kupplung eingreift, beispielsweise unmittelbar am Betätigungsglied 16. Das Gleiche gilt für den Fall, dass eine hydraulische Übertragungsstrecke vorgesehen ist. Hier muss der Notaktor auf der Seite des Nehmerkolbens der hydraulischen Übertragungsstrecke angreifen.

Als Aktor muss nicht ein Elektromotor vorgesehen sein. Es kann auch ein Hydraulikzylinder, Pneumatikzylinder usw. vorgesehen sein. Die Ermittlung der Bewegung der Kupplung in Öffnungsrichtung erfolgt dann in anderer geeigneter Weise. Die Bewegung der Kupplung in Offenstellung kann insgesamt überwacht werden. Beispielsweise kann bei in Ordnung befindlichem System ein Sollgeschwindigkeitsverlauf aufgenommen werden, der dann mit einem Ist-Geschwindigkeitsverlauf verglichen wird. Über einem Schwellwert liegende Abweichungen deuten auf Verschleiß in System oder sonstige Fehler hin. Das Zeitfenster des Schrittes 66 beginnt beispielsweise mit der Deaktivierung des Elektromotors im Schritt 60.

Das System bzw. das Verfahren kann dahingehend abgeändert werden, dass das Öffnen des Elektromotors gesteuert erfolgt, indem der Elektromotor 14 derart mit Spannung beaufschlagt wird, dass sich ein vorbestimmter Bewegungsablauf ergibt, entsprechend dem die Kupplung 10 gesteuert öffnet. Hierbei wird das Öffnen der Kupplung entsprechend überwacht.

Das geschilderte Verfahren kann jedes Mal durchgeführt werden, wenn der Elektromotor 14 deaktiviert wird, oder kann gesondert durchgeführt werden, um die Funktion der Kupplungsbetätigung gesondert zu überprüfen. Beispielsweise kann bei abgeschaltetem Motor und stillstehendem Fahrzeug eine Routineprüfung erfolgen.

Das beschriebene Verfahren muss nicht alle Schritte enthalten und kann mit zusätzlichen Schritten ausgerüstet sein, mit denen weitere Detailfehler erfasst und angezeigt werden können. Der Eingriff zwischen der Welle und dem Segmentrad muss nicht über eine Schneckenverzahnung erfolgen, sondern kann auch über reine Stirnverzahnungen erfolgen, die ohne jede Selbsthemmung sind.

### Bezugszeichenliste

- 10: Kupplung
- 12: Übertragungsmechanismus
- 14: Elektromotor
- 16: Betätigungsglied
- 18: Lager
- 20: Segmentrad
- 22: Gehäuse
- 24: Verzahnung
- 26: Ausgangswelle
- 28: Schneckenverzahnung
- 30: Inkrementzähler
- 32: Steuergerät
- 34: Anschlag
- 36: Anschlagfläche
- 38: Anschlagfläche
- 40: Schalter

## Patentansprüche

1. Verfahren zum Überwachen des Betriebes einer von einem Betätigungsaktor in Schließstellung bewegten und sich selbsttätig in Offenstellung bewegenden Kupplung, bei welchem Verfahren das Erreichen der Offenstellung der Kupplung bei fehlender Energiebeaufschlagung des Aktors überwacht wird.

2. Verfahren nach Anspruch 1, wobei das Erreichen der Offenstellung der Kupplung **dadurch** überwacht wird, dass ein bei Erreichen der Offenstellung der Kupplung sich in einer vorbestimmten Stellung befindliches Bauteil die vorbestimmte Stellung erreicht.

3. Verfahren nach Anspruch 1 oder 2, wobei Geschwindigkeit eines sich bei aus der Schließstellung in die Offenstellung bewegender Kupplung bewegenden Bauteils erfasst wird und mit einer Sollgeschwindigkeit verglichen wird.

4. Verfahren nach Anspruch 1, wobei die Kupplung mittels eines Notaktors in die Offenstellung bewegt wird, wenn sie die Offenstellung nicht innerhalb einer vorbestimmten Zeitdauer nach Abschalten der Energiebeaufschlagung des Betätigungsaktors erreicht.

5. Vorrichtung zum Überwachen des Betriebes einer von einem Betätigungsaktor selbsttätig in Schließstellung bewegten und sich in Offenstellung bewegenden Kupplung (10), wobei
der Betätigungsaktor ein Elektromotor (14) ist, dessen Ausgangswelle (26) über ein Getriebe ein Betätigungsglied (16) der Kupplung bewegt,
das Betätigungsglied gegen die Kraft einer die Kupplung in Öffnungsstellung vorspannenden Öffnungsfeder von dem in Schließdrehrichtung drehenden Elektromotor derart bewegbar ist, dass die Kupplung schließt, und
das Getriebe derart ausgebildet ist, dass der Elektromotor bei fehlender Energiebeaufschlagung durch die Kraft der Öffnungsfeder entgegen der Schließdrehrichtung dreht, bis die Kupplung ihre Offenstellung erreicht, welche Vorrichtung enthält
eine Überwachungseinrichtung (30, 32) zum Überwachen, ob die Kupplung nach Abschalten der Energiebeaufschlagung des Elektromotors für dessen Antrieb in Öffnungsdrehrichtung ihre Offenstellung erreicht.

6. Vorrichtung nach Anspruch 5, wobei die Überwachungseinrichtung (30, 32) überwacht, ob die Kupplung (10) ihre Offenstellung innerhalb einer vorbestimmten Zeitdauer nach Abschalten der Energiebeaufschlagung des Elektromotors (14) für dessen Antrieb in Öffnungsdrehrichtung erreicht.

7. Vorrichtung nach Anspruch 5, wobei die Überwachungseinrichtung (30) das Erreichen der Offenstellung durch Betätigen eines Schalters (40) erfasst.

8. Vorrichtung nach Anspruch 5, wobei die Überwachungseinrichtung (30, 32) die Drehzahl des Elektromotors (14) bei dessen Antrieb durch die Öffnungsfeder erfasst und eine Fehlermeldung auslöst, wenn diese Drehzahl von einer vorbestimmten Drehzahl um mehr als ein Schwellwert abweicht.

9. Vorrichtung nach einem der Ansprüche 5 bis 8, wobei die Überwachungseinrichtung bei Feststellen eines Fehlers bei der selbstständigen
Bewegung der Kupplung (10) aus der Schließstellung in die Offenstellung einen Aktor (14) zum Bewegen der Kupplung (10) aus der Schließstellung in die Offenstellung aktiviert.

10. Überwachungseinrichtung nach Anspruch 5, wobei die Kupplung eine Kupplung (10) eines Parallelschaltgetriebes ist.
